# EUROPÄISCHE PATENTSCHRIFT

(11) **EP 1 091 188 B1**
(45) Veröffentlichungstag und Bekanntmachung des Hinweises auf die Patenterteilung: **29.09.2004**
(21) Anmeldenummer: 99113927.0
(22) Anmeldetag: 16.07.1999
(51) Int. Cl.: G01C 11/00

(54) **Verfahren zur Korrektur atmosphärischer Einflüsse in multispektralen optischen Fernerkundungsdaten**
Method for correcting atmospheric influences in multispectral optical teledetection data
Méthode de correction des influences de l'atmosphère sur les données multispectrales de télédétection optique

(43) Veröffentlichungstag der Anmeldung: 11.04.2001
(73) Patentinhaber: Deutsches Zentrum für Luft- und Raumfahrt e.V., 53175 Bonn (DE)
(72) Erfinder: Holzer-Popp, Thomas, Dr., 86911 Diessen (DE); Bittner, Michael, Dr., 86929 Untermühlhausen (DE); Borg, Erik, Dipl.-Ing., 16247 Joachimsthal (DE); Dech, Stefan, Dr., 82205 Gilching (DE); Ebertseder, Thilo, Dipl.-Ing., 80639 München (DE); Fichtelmann, Bernd, Dr., 17235 Neustrelitz (DE); Schroedter, Marion, Dipl.-Ing., 82205 Gilching (DE)
(74) Vertreter: von Kirschbaum, Albrecht, Dipl.-Ing.

(56) Entgegenhaltungen:
- DE-A- 4 102 579
- BIJKER W ET AL: "A REMOTE SENSING MONITORING SYSTEM FOR A SETTLEMENT AREA IN TROPICAL RAIN FOREST" PROCEEDINGS OF THE INTERNATIONAL GEOSCIENCE AND REMOTE SENSING SYMPOSIUM (IGARSS),US,NEW YORK, IEEE, Seite 97-99 XP000493096 ISBN: 0-7803-1498-0
- HEINZELMANN E: "PHOTOGRAMMETRIE-KNOW-HOW FUER FERNERKUNDUNG UND ROBOTIK" TECHNISCHE RUNDSCHAU,CH,HALLWAG VERLAG. BERN, Bd. 85, Nr. 22, Seite 40-45 XP000378632 ISSN: 1023-0823

## Beschreibung

Die Erfindung betrifft ein Verfahren zur Korrektur atmosphärischer Einflüsse in multispektralen optischen Fernerkundungsdaten, die in unterschiedlichen Satelliten- oder Flugzeug-Sensoren zur satelliten- bzw. flugzeuggestützten Erdbeobachtung mit unterschiedlicher geometrischer und/oder spektraler Auflösung gewonnen und als Rohdaten für eine Bilderzeugung eingelesen und verarbeitet werden.

Neben der Georeferenzierung ist die Atmosphärenkorrektur eine wesentliche Grundvoraussetzung, um aus Fernerkundungsdaten quantitative Parameter und Indikatoren abzuleiten.

Es existiert bereits eine Reihe von grundlegenden Verfahren zur atmosphärischen Korrektur von multispektralen Fernerkundungsdaten. Ein Teil dieser Verfahren befindet sich allerdings erst auf einem wissenschaftlichen Entwicklungsstand (Labormuster, beispielsweise H. Rahman, G. Dedieu: "SMAC", A simplified method for atmospheric correction of satellite measurements in the solar spectrum, Int. J. Rem. Sens., 15, 1, S. 123-143, 1994, und "EXACT", Th. Popp: Correcting atmospheric masking to retrieve the spectral albedo of land surfaces from satellite measurements, Int. J. Rem. Sens., 16, S. 3483-3508, 1995), der eine routinemäßige automatische Verarbeitung multispektraler Fernerkundungsdaten von verschiedensten Sensoren nicht zuläßt.

Daneben gibt es Verfahren, die zur Zeit als Industriemuster in kommerziellen Programmpaketen für die atmosphärische Korrektur von multispektralen Fernerkundungsdaten eingesetzt werden und von denen eines aus DE 41 02 579 C2 bekannt ist. Sie beruhen auf der Bestimmung von Referenzgebieten geringer Reflektanz, die in den Fernerkundungsdaten identifiziert werden müssen. Als Kriterien für diese Referenzgebiete werden beispielsweise der Grauton, die Farbe oder die multispektrale Signatur verwendet. Für die Berechnung der Atmosphärenkorrektur müssen außerdem die Eigenschaften der zu korrigierenden Atmosphäre bekannt sein. In der Regel werden hier vorgegebene Standardatmosphären eingesetzt. Diese als Industriemuster eingesetzten Verfahren benötigen z.B. für die Auswahl von Referenzgebieten und atmosphärischen Parametern den interaktiven Eingriff eines Experten, der spezielle Kenntnisse und Erfahrungen auf dem Gebiet der Atmosphärenkorrektur besitzen muß. Sie lassen sich deshalb nicht für die automatische Atmosphärenkorrektur von Fernerkundungsdaten einsetzen.

Bei den kommerziell eingesetzten Industriemuster-Verfahren erfolgt die Atmosphärenkorrektur manuell durch interaktives Parameterabstimmen, wobei in der Regel auf vorgegebene Standardinformationen zurückgegriffen wird, z.B. in Form einer begrenzten Anzahl von Standardatmosphären und/oder vorgegebener Sichtverhältnisse. Die Auswahl der für den gerade bearbeiteten Fernerkundungsdatensatz am besten passenden Standardinformation erfordert Expertenwissen des Bedienpersonals. Außerdem erfolgt bisher keine automatische Identifikation von Validationsgebieten, z.B. von Referenzgebieten geringer Reflektanz, sowie von Gebieten bekannten Reflexionsverhaltens. Diese Gebiete werden derzeit ebenfalls interaktiv durch das Bedienpersonal identifiziert und markiert.

Die erwähnten wissenschaftlichen Verfahren in Form bekannter Labormuster sind im allgemeinen im Hinblick auf einen speziellen Sensor oder sogar auf einen speziellen Anwendungsfall optimiert oder benutzen nur zeitlich/räumlich schlecht korrelierte Zusatzdaten, z.B. Klimatologien und Wetteranalysedaten.

Bei den bekannten Industriemustern und den meisten Labormustern wird darüber hinaus die Anisotropie der Reflexion am Erdboden nicht berücksichtigt. Ein weiteres, bisher noch nicht gelöstes Problem in der Bearbeitung von Fernerkundungsdaten besteht darin, daß zwar für einzelne Datensätze aktuelle Zustandsmessungen der Atmosphäre zur Korrektur einbezogen werden können, in der Regel jedoch keine großräumige Berücksichtigung aktueller atmosphärischer Parameter innerhalb dieser Verfahren erfolgen kann.

Der Einfluß der Nichtberücksichtigung der Atmosphärenparameter läßt sich beispielsweise für den sogenannten Normalized Differential Vegetation Index (NDVI) aufzeigen. Der NDVI wird aus bispektralen Messungen im Roten (Kanal 1) und im Nahen Infrarot (Kanal 2) gewonnen und ist eine Standardgröße, die infolge ihrer Berechnungsmethode bereits eine Korrektur nullter Ordnung des Atmosphäreneinflusses liefert. Die nachfolgende Tabelle gibt einen Überblick über den möglichen Einfluß der wichtigsten Atmosphärenparameter (Ozon, Wasserdampf, Molekül- bzw. Rayleighstreuung, Aerosolstreuung) auf Daten der spektralen Reflektanz und des NDVI am Beispiel eines bekannten Sensors (NOAA-AVHRR) und zeigt somit die Fehler, die dieser Korrektur nullter Ordnung immer noch anhaften können, wenn keine aktuellen Atmosphärenparameter zur Atmosphärenkorrektur verwendet werden. Die proportionalen Effekte (Transmission) sind in der Tabelle in Prozentwerten und andere Angaben in absoluten Reflektanzen gemacht.

**Tabelle**

| | Ozon 250-500[D.U.] | Wasserdampf 0,5-4,0 [g/cm²] | Rayleigh 1013,25 hPa | Aerosol kontinental τ₅₅₀ₙₘ = 0,05-0,8 |
|---|---|---|---|---|
| Kanal 1 620±120 nm | - 4-13,5 % | - 0,7-4,4 % | + 0,018-0,07 | + 0,005-0,12 |
| Kanal 2 885±195 nm | - 0,02-0,5 % | - 7,7-22 % | + 0,006-0,04 | + 0,003-0,083 |
| NDVI 0,05 (blanker Boden) ρ1=0,19/ρ2=0,21 | + 0,02-0,07 | - 0,011-0,12 | - 0,036-0,094 | - 0,006-0,085 |
| NDVI 0,85 (Laubwald) ρ1=0,03/ρ2=0,36 | + 0,006-0,017 | - 0,036-0,038 | - 0,086-0,26 | - 0,022-0.34 |

Der Erfindung liegt die Aufgabe zugrunde, ein Verfahren zur Korrektur atmosphärischer Einflüsse für multispektrale Fernerkundungsdaten zu schaffen, das sich für eine Einbindung in eine automatische Prozessierungskette eignet und deswegen anders als die dem Stand der Technik entsprechenden Verfahren wichtige Kriterien erfüllt, die darin bestehen, daß aktuelle Referenzgebiete automatisch ermittelt werden und aktuelle Atmosphärenparameter verwendet werden, daß keine interaktiven Eingriffe des Bedienpersonals nötig sein dürfen und daß auch kein Expertenwissen des Bedienpersonals erforderlich sein sollte.

Gemäß der Erfindung, die sich auf ein Verfahren der eingangs genannten Art bezieht, wird diese Aufgabe dadurch gelöst, daß in einem ersten Teilprozeß eine Vorklassifizierung der Rohdaten zur automatischen Erkennung vordefinierter Klassen vorgenommen wird, daß in einem zweiten Teilprozeß eine Korrekturrechnung zur Umwandlung der unkorrigierten Reflexionsgrade in korrigierte Reflexionsgrade am Erdboden durchgeführt wird und daß dabei aktuelle und im wesentlichen vollständige Zusatzdaten über den aktuellen Atmosphärenzustand einbezogen werden. Die Vorklassifizierung ermöglicht eine genauere Korrekturrechnung durch Erzeugung von notwendigem a-priori-Wissen.

Durch vortabellierte/parametrisierte Strahlungstransportrechnung wird das Verfahren nach der Erfindung schnell und ist damit für den operationellen Einsatz geeignet. Um eine gute raum-zeitliche Korrelation der Atmosphärendaten mit den zu korrigierenden Daten zu erreichen, werden diese Größen, soweit wie möglich, aus den zu korrigierenden Daten abgeschätzt. Weitere Zusatzdaten, die nicht aus den zu korrigierenden Daten gewonnen werden können, lassen sich über eine externe Schnittstelle aus operationellen Prozessierungsketten von außen erheben und mit geeigneten Methoden interpolieren.

Beim numerischen Verfahren zur automatischen Atmosphärenkorrektur nach der Erfindung können als Rohdaten die Daten unterschiedlicher Sensoren mit unterschiedlicher geometrischer und/oder spektraler Auflösung eingelesen und verarbeitet werden, z.B. NOAA-AVHRR, ERS-ATSR, (SEA)WIFS, EOS-MODIS, Landsat-TM und -MSS, IRS-LISS, SPOT-HRV. Wesentlich beim Verfahren nach der Erfindung ist die Kombination aus einer ereignisgesteuerten Klassifikation und Objektidentifikation, d.h. einer Lokalisierung und inhaltlichen Zuweisung von Objekten, der eigentlichen Korrekturrechnung und der Verwendung aktueller und vollständiger Zusatzdaten über den Atmosphärenzustand. Erst diese Kombination ermöglicht eine automatische Atmosphärenkorrektur ohne interaktive Eingriffe oder Expertenwissen.

Das Verfahren nach der Erfindung setzt sich also aus zwei Teilprozessen zusammen, die sich in vorteilhafter Weise als Hauptmodule zusammenfügen lassen. Der erste Hauptmodul dient zur Detektion und Identifikation von Dunkelgebieten und Gebieten signifikanten spektralen Verhaltens in den Fernerkundungsdaten und der zweite Hauptmodul zur atmosphärischen Korrektur der Fernerkundungsdaten.

Die beiden Hauptmodule bestehen in zweckmäßiger Weise aus Submodulen. Diese werden vorteilhaft durch eine Datenbank, in der statische und dynamische Grunddaten sowie a-priori-Wissen, z.B. spektrale Signaturen, Sensorspezifikationen, statistische Eigenschaften, Korrekturverfahren und Assimilationsverfahren, gespeichert sind, ergänzt. Auf diese Datenbank können beide Hauptmodule zugreifen.

Der erste Hauptmodul besteht seinerseits in zweckmäßiger Weise aus zwei Submodulen. Der erste dieser beiden Submodule dient dabei der Identifikation von Referenzgebieten geringer Reflektanz, z.B. von Wasserflächen und dunklen Waldflächen, sowie der Erkennung von Ausschlußgebieten, z.B. von Wolken und Wolkenschatten. Dabei greift dieser Submodul auf die in der Datenbank gespeicherten Modellspektren und sensorspezifische Informationen zurück. Der zweite dieser beiden Submodule dient einerseits der Homogenitätsanalyse identifizierter Referenzgebiete (Test auf Repräsentativität der selektierten Gebiete), der Gebietsgrößenanalyse und andererseits der Analyse der unmittelbaren und mittelbaren Nachbarschaft.

Der zweite Hauptmodul, welcher also der atmosphärischen Korrektur der Fernerkundungsdaten dient, besteht seinerseits in zweckmäßiger Weise ebenfalls aus zwei Submodulen. Der erste dieser beiden Submodule dient der Aufarbeitung der benötigten Zusatzdaten. Dabei greift dieser Submodul auf interne Zusatzdaten zu, wie sie aus den Rohdaten und den Ergebnissen des ersten Hauptmoduls abgeleitet werden, und verarbeitet externe Zusatzdaten, die über eine externe Schnittstelle, z.B. online oder via CD-ROM, bereitgestellt werden. Dabei kann auf Standardmethoden der Datenassimilation und -interpolation zurückgegriffen werden, die in der Methodendatenbank bereitgestellt werden. Der zweite dieser beiden Submodule führt die eigentlichen Korrekturschritte mit Hilfe der Zusatzdaten aus dem ersten Submodul durch. Dabei kann auf Korrekturmethoden zugegriffen werden, die in der Methodendatenbank gespeichert sind.

Weitere zweckmäßige und vorteilhafte Weiterbildungen des Verfahrens nach der Erfindung sind in den Unteransprüchen angegeben.

Das Verfahren zur Korrektur atmosphärischer Einflüsse multispektraler optischer Fernerkundungsdaten nach der Erfindung wird nachfolgend anhand einer einen schematischen Überblick gebenden Figur detailliert erläutert.

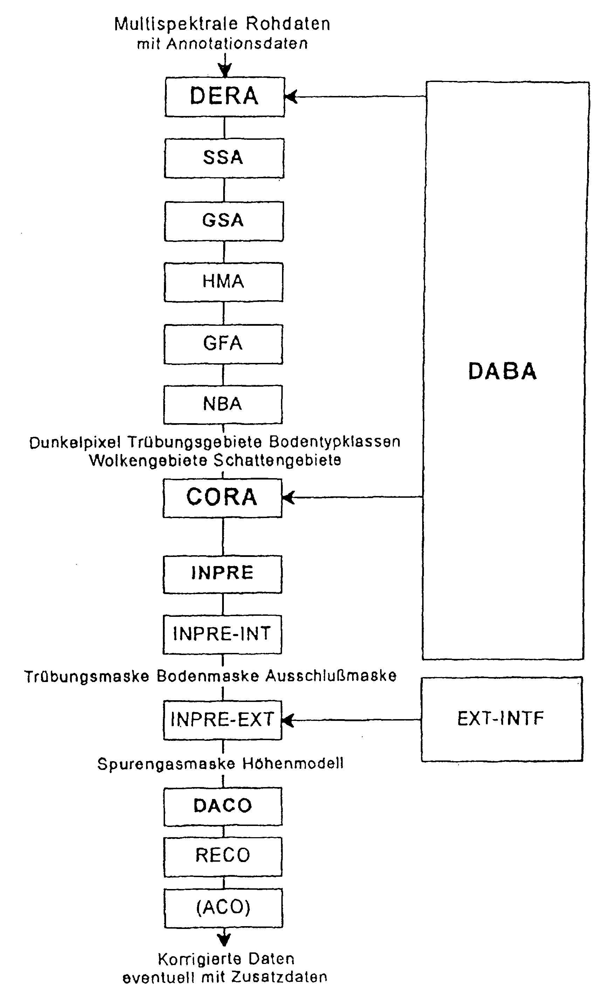

Das in der Figur dargestellte Verfahren zur automatischen Atmosphärenkorrektur nach der Erfindung besteht aus zwei verschiedenen Teilprozessen, die als Hauptmodule DERA und CORA zusammengefügt werden. Der Hauptmodul DERA ("Detection of Reference Areas") dient zur Detektion und Identifikation von Dunkelgebieten und Gebieten signifikanten spektralen Verhaltens in den Fernerkundungsdaten und der Hauptmodul CORA ("Correction of Atmosphere") zur atmosphärischen Korrektur der Fernerkundungsdaten. Beide Hauptmodule DERA und CORA greifen auf eine Datenbank DABA mit dort eingespeicherten Methoden und Parametern zurück. Als Ergebnis liefert das Verfahren ein Pixelbild der atmosphärenkorrigierten Bodenreflexion unter Berücksichtigung von atmosphärischen Zusatzdaten, anisotroper Reflexionseigenschaften verschiedener Bodentypklassen und der Geländehöhe. Die Daten unterschiedlicher Sensoren mit unterschiedlicher geometrischer und/oder spektraler Auflösung können als Rohdaten eingelesen und verarbeitet werden.

Der Hauptmodul DERA besteht aus zwei Submodulen SSA ("Spektrale Signaturanalyse") und GSA ("Geometrische Strukturanalyse"). Bei der spektralen Signaturanalyse im Submodul SSA wird auf eine Analyse des spektralen Verhaltens des multispektralen Datensatzes auf Pixelebene abgezielt. Die Daten unterschiedlicher Sensoren und/oder unterschiedlicher geometrischer Auflösung können als Rohdaten eingelesen und verarbeitet werden. Dabei erfolgt auf der Grundlage generalisierter Modellspektren für fernerkundbare Objekte auf Pixelebene eine Zuweisung der Pixel des Fernerkundungsdatensatzes zu den wahrscheinlich detektierten fernerkundbaren Objekten in der Realität. Die für diese Analyse erforderlichen Modellspektren sind in der Datenbank DABA gespeichert, auf die der im Submodul SSA auszuführende Algorithmus zurückgreift. Des weiteren sind in der Datenbank DABA die für diese Analyse erforderlichen Sensorspezifikationen gespeichert, die als a-priori-Wissen verfügbar gemacht werden.

Auf der Grundlage dieser Informationen sowie des spektralen Verhaltens der Einzelpixel erfolgt ihre Zuweisung zu geeigneten Referenzgebieten, die als Dunkelgebiete dienen können. Weiterhin bilden sie die Grundlage für die Zuweisung einer Bodentypklasse (Wald, Wiese, Moor, Savanne, bracher Acker, bebauter Acker, Buschland, Wasser, Siedlung, Fels, Sand), durch die im Hauptmodul CORA eine geeignete Funktion zur Modellierung der anisotropen Bodenreflexion ausgewählt werden kann.

Der Submodul GSA dient zur Homogenitätsanalyse identifizierter Referenzgebiete, zur Gebietsgrößenanalyse sowie zur Analyse der unmittelbaren und mittelbaren Nachbarschaft. Dem Submodul GSA zur geometrischen Strukturanalyse werden die durch den Submodul SSA zur spektralen Signaturanalyse detektierten Datenbereiche übermittelt und auf hinreichende Größe untersucht. Die im Submodul GSA vorgenommene geometrische Strukturanalyse gliedert sich wiederum in einen Modul HMA zur Homogenitätsanalyse, einen Modul GFA zur Größen- und Formanalyse identifizierter Datenbereiche und in einen Modul NBA zur Nachbarschaftsanalyse.

Der Modul HMA zur Homogenitätsanalyse dient der Identifikation von zusammenhängenden Gebieten bzw. von Gebieten, die gesondert bei der weiteren Bildverarbeitung behandelt werden müssen. Dabei werden mit einer Filtermatrix (m × m) Bildbereiche auf ihre lokale Homogenität untersucht und mit den Schwellwerten verglichen. Das Homogenitätsmaß, das dann als Schwellwert für den Datensatz bereitgestellt wird, wird direkt aus den Daten abgeleitet. Dazu wird der Datensatz in Datensektoren gegliedert und mit Filtern absteigender Größe statistisch analysiert. Als statistische Maße werden der Mittelwert, die Standardabweichung sowie der Variationskoeffizient abgeleitet.

In dem sich anschließenden Modul GFA zur Größen- und Formanalyse der identifizierten Datenbereiche wird diesen Gebieten eine Objektidentifikation zugeordnet, so daß die Formparameter den Objekten direkt zugewiesen werden können. Dazu werden die Flächengröße, der Umfang und die Kompaktheit der Objekte ermittelt, so daß ein Kriterium zur Bewertung der Objekte als Referenzflächen abgeleitet wird.

Als Entscheidungskriterien für Referenzflächen werden definiert: Unterschreitung einer Maximalgröße für die Reflexion im mittleren Infrarot bzw. alternativ Unterschreitung einer Spektralschwelle im Nahinfrarot-Kanal in Verbindung mit einer Überschreitung einer Mindestgröße für einen Vegetationsindex, zusätzlich Überschreitung einer Mindestgröße des Gebiets.

Anschließend wird durch den Modul NBA zur Nachbarschaftsanalyse die unmittelbare und mittelbare Nachbarschaft der als homogen identifizierten Datenregionen analysiert. Das Ziel dieser Analyse besteht in der Erfassung sogenannter Misch- und Störpixel, die gesondert hinsichtlich ihrer Zugehörigkeit zu den angrenzenden Objekten behandelt werden müssen, um ihnen eine geeignete Bodentypklasse zuordnen zu können. Dazu werden die Daten mit Filtern in absteigender Größe hinsichtlich der Übergangskontraste zwischen den identifizierten Datensektoren analysiert, um so z.B. Wolken- oder Dunstbeeinflussung abschätzen zu können und Phänomene unterschiedlicher Längenskalen (z.B. kleinräumige Variabilität der Landnutzung von großräumiger Veränderung des Atmosphärenzustands) trennen zu können.

Der Hauptmodul CORA besteht aus zwei Submodulen INPRE ("Input Preparation") und DACO ("Data Correction").

Der Submodul INPRE zielt auf die pixelweise Bereitstellung der benötigten Zusatzdaten für den Submodul DACO ab und ist in zwei Bereitstellungsmodule INPRE-INT und INPRE-EXT aufgeteilt. Der Modul INPRE-INT verwendet dazu Resultate des ersten Hauptmoduls DERA (interne Zusatzdaten); der Modul INPRE-EXT arbeitet die über eine externe Schnittstelle EXT-INTF (Online oder von CD-ROM, z.B. vom Deutschen Fernerkundungsdatenzentrum DFD) bereitgestellten Atmosphärendaten (externe Zusatzdaten) auf. Der Submodul INPRE bestimmt dabei im einzelnen pixelweise folgende Zusatzdaten: Trübungsmaske, Bodenmaske und Ausschlußmaske (INPRE-INT), Spurengasmasken und Geländemodell (INPRE-EXT).

Durch den Modul INPRE-INT wird die aerosol-optische Dicke in sichtbaren Kanälen über den vom ersten Hauptmodul DERA ermittelten Referenzflächen mittels einer Dunkelfeldmethode ermittelt und mit geeigneten Interpolationsroutinen aus der Datenbank DABA auf alle Pixel und Spektralkanäle übertragen (Trübungsmaske). Bei der räumlichen Interpolation werden die vom ersten Hauptmodul DERA ermittelten zusammenhängenden Gebiete ähnlicher Atmosphärenbedingungen berücksichtigt. Die vom ersten Hauptmodul DERA ermittelte Bodentypklasse wird zur Auswahl der geeigneten Modellfunktion der anisotropen Reflexionseigenschaften verwendet (Bodenmaske). Vom ersten Hauptmodul DERA bestimmte Wolken- und Schattengebiete werden als "nicht zu korrigierende Pixel" vermerkt (Ausschlußmaske).

Über die Online-Schnittstelle EXT-INTF oder via CD-ROM werden durch den Modul INPRE-EXT Satelliten- bzw. Flugzeugdaten der Gesamtsäule von Ozon und Wasserdampf geladen (z.B. vom Deutschen Fernerkundungsdatenzentrum DFD) und mit geeigneten Assimilationsverfahren (z.B. Harmonische Analyse, Kalmanfilter, Kriging) aus der Datenbank DABA auf den Zeitpunkt/geographischen Ort der Rohdaten umgerechnet (Spurengasmasken). Über dieselbe Schnittstelle wird ein geeigneter Ausschnitt eines digitalen Höhenmodells erhoben und auf die Sensorkoordinaten umprojiziert.

Der Submodul DACO führt die pixelweise Korrektur aller nicht ausgeschlossenen Pixel (Ausschlußmaske) mit Hilfe der Zusatzdaten (Masken) aus dem Submodul INPRE durch. Dabei wird wahlweise auf schnelle Korrekturmethoden aus der Datenbank DABA zugegriffen (mittels bekannten Strahlungstransportprogrammen, z.B. 6S, SOS, MODTRAN berechnete Lookup-Tabellen oder publizierte Parametrisierungsschemata, z.B. SMAC, EXACT).

Der Submodul DACO führt zunächst für jedes Pixel der Rohdaten eine Umrechnung des am Oberrand der Atmosphäre gemessenen Wertes in einen Reflexionskoeffizienten am Boden durch und zwar durch einen Modul RECO (Reflectance Conversion). Dabei werden die Pixelwerte der Trübungsmaske, der Bodenmaske, der Spurengasmaske und des Höhenmodells als Zusatzdaten verwendet. Der Submodul DACO berücksichtigt die Anisotropie der Reflexion von der Erdoberfläche durch Verwendung einer geeigneten Modellfunktion für jeden aus dem Hauptmodul DERA bestimmten Bodentyp.

Für die Korrektur der Einstrahlung in das Gesichtsfeld des Sensors aus benachbarten Pixeln wird in einem zweiten Schritt, der allerdings nur für hochauflösende Sensoren notwendig ist, in einem Modul ACO ("Adjacency Correction") ein einfaches Nachbarschaftsfilter unter Verwendung der Trübungsmaske eingesetzt.

Die Module greifen auf die Methoden- und Parameterdatenbank DABA zu. In dieser sind Daten (Sensorparameter, Modellspektren, Aerosolmodelle, Anisotropietypen, Atmosphärenmodelle) zusammen mit Methoden (Strahlungstransportmethoden, Parametrisierungsschemata, Assimilations- und Interpolationsmethoden) verfügbar.

Die Rohdaten müssen grob (etwa ± 1 Pixel bzw. ± 1 Grad) mit der geographischen Position (geographische Länge, geographische Breite) und der Beobachtungsgeometrie (Beobachtungszenit, Beobachtungsazimut) jedes einzelnen Pixels annotiert sein; als Interpolationsmethoden sollten allenfalls "nearest neighbour"-Verfahren verwendet werden. Die Rohdaten müssen multispektral sein und mindestens einen sichtbaren und einen Nah-Infrarot-Kanal aufweisen. Optimal ist zusätzlich ein Kanal im mittleren Infrarot (genaueres Dunkelfeldverfahren) und ein weiterer Kanal im Sichtbaren (genauere spektrale Interpolation der aerosol-optischen Dicke). Zu den Beobachtungsdaten muß die genaue Aufnahmezeit bereitgestellt werden, um den Sonnenstand berechnen zu können. Alternativ kann auch der Zenit- und Azimutwinkel der Sonne zu jedem Pixel als zusätzlicher Kanal geliefert werden.

## Patentansprüche

1. Verfahren zur Korrektur atmosphärischer Einflüsse von bei einer multispektralen optischen und/oder thermalen Fernerkundung des Erdbodens mittels satelliten- oder flugzeuggestützter Sensoren aufgenommenen Bodenreflexions-Pixelbildern, **dadurch gekennzeichnet, dass** in einem ersten Teilprozess eine Vorklassifizierung von der Pixelbilderzeugung dienenden multispektralen Fernerkundungs-Rohdaten derart vorgenommen wird, dass Dunkelgebiete und Gebiete signifikanten spektralen Verhaltens unter Zugriff auf in einer Datenbank gespeicherte generalisierte Modellspektren detektiert und identifiziert werden und hierbei auf der Grundlage der in der Datenbank gespeicherten Modellspektren für fernerkundbare Objekte auf Pixelebene eine Zuweisung der Pixel eines jeweils eingelesenen Fernerkundungs-Rohdatensatzes zu den wahrscheinlich detektierten fernerkundbaren Objekten vorgenommen wird, dass in einem zweiten Teilprozess, bei dem die unkorrigierten Reflexionsgrade in korrigierte Reflexionsgrade umgewandelt werden, dazu zum einen auf interne, aus den Rohdaten und den Ergebnissen des ersten Teilprozesses abgeleitete Zusatzdaten zugegriffen wird und zum anderen über eine externe Schnittstelle zugeführte externe Zusatzdaten, in die im wesentlichen vollständige Zusatzdaten über den aktuellen Atmosphärenzustand einbezogen sind, unter Zurückgreifen auf in der Datenbank bereitgestellte Methoden der Datenassimilation und -interpolation verarbeitet werden, und dass dann die eigentlichen Korrekturschritte mit Hilfe dieser Zusatzdaten durchgeführt werden, wobei auf Korrekturverfahren in der Korrekturmethoden enthaltenden Datenbank zugegriffen wird.

2. Verfahren nach Anspruch 1, **dadurch gekennzeichnet, dass** die beiden Teilprozesse jeweils in einem Modul durchgeführt werden und dass diese beiden Module als Hauptmodule (DERA, CORA) zusammengefügt werden.

3. Verfahren nach Anspruch 2, **dadurch gekennzeichnet, dass** der erste, den ersten Teilprozess durchführende Hauptmodul (DERA) die Detektion und Identifikation von Dunkelgebieten und Gebieten signifikanten spektralen Verhaltens in den Fernerkundungs-Rohdaten vornimmt und dass im zweiten Hauptmodul (CORA) die Korrekturrechnung gemäß dem zweiten Teilprozess durchgeführt wird.

4. Verfahren nach Anspruch 3, **dadurch gekennzeichnet, dass** der erste Hauptmodul (DERA) aus zwei Submodulen (SSA, GSA) besteht, von denen der erste (SSA) für eine spektrale Signaturanalyse und der zweite (GSA) für eine geometrische Strukturanalyse zuständig ist, dass in den auf eine Analyse des spektralen Verhaltens auf Pixelebene abzielenden ersten Submodul (SSA) die Daten der unterschiedlichen Sensoren mit unterschiedlicher geometrischer und/oder spektraler Auflösung als Rohdaten eingelesen und verarbeitet werden und auf der Grundlage generalisierter Modellspektren für fernerkundbare Objekte auf Pixelebene eine Zuweisung der Pixel des eingelesenen Fernerkundungsdatensatzes zu den wahrscheinlich detektierten fernerkundbaren Objekten in der Realität vorgenommen wird, wobei die für diese Analyse erforderlichen Modellspektren in der Datenbank (DABA), auf die beim ersten Teilprozess zugegriffen wird, gespeichert sind, und dass im zweiten Submodul (GSA) des ersten Hauptmoduls (DERA) eine Homogenitätsanalyse identifizierter Referenzgebiete, eine Gebietsgrößenanalyse sowie eine Analyse der unmittelbaren und mittelbaren Nachbarschaft vorgenommen wird, wobei diesem zweiten Submodul (GSA) die durch den ersten Submodul (SSA) detektierten Datenbereiche übermittelt und auf hinreichende Größe untersucht werden.

5. Verfahren nach Anspruch 4, **dadurch gekennzeichnet, dass** der zweite Submodul (GSA) des ersten Hauptmoduls (DERA) in einen Homogenitätsanalyse-Modul (HMA), einen Größen- und Formanalyse-Modul (GFA) für identifizierte Bereiche und einen Nachbarschaftsanalyse-Modul (NBA) aufgegliedert ist, dass der Homogenitätsanalyse-Modul (HMA) die Identifikation von zusammenhängenden Gebieten bzw. von Gebieten, die gesondert bei der weiteren Bildverarbeitung behandelt werden müssen, vornimmt, dass durch den Größen- und Formanalyse-Modul (GFA) den identifizierten Datenbereichen eine Objektidentifikation zugeordnet wird, so dass die Formparameter den Objekten direkt zugewiesen werden können, und dass der Nachbarschaftsanalyse-Modul (NBA) die Analyse der unmittelbaren und mittelbaren Nachbarschaft der als homogen identifizierten Datenregionen vornimmt, wobei das Ziel dieser Analyse in der Erfassung sogenannter Misch- und Störpixel besteht, die gesondert hinsichtlich ihrer Zugehörigkeit zu den angrenzenden Objekten behandelt werden, um ihnen eine geeignete Bodentypklasse zuordnen zu können.

6. Verfahren nach Anspruch 5, **dadurch gekennzeichnet, dass** im Homogenitätsanalyse-Modul (HMA) mit einer Filtermatrix (m × m) Bildbereiche auf ihre lokale Homogenität untersucht und mit Schwellenwerten verglichen werden, wobei das Homogenitätsmaß, das dann als Schwellenwert für den Datensatz bereitgestellt wird, direkt aus den Daten abgeleitet wird, und dass dazu der Datensatz in Datensektoren gegliedert und mit Filtern absteigender Größe statistisch analysiert wird, wobei als statistische Maße der Mittelwert, die Standardabweichung sowie der Variationskoeffizient abgeleitet werden.

7. Verfahren nach Anspruch 5, **dadurch gekennzeichnet, dass** im Größen- und Formanalyse-Modul (GFA) die Flächengröße, der Umfang und die Kompaktheit der Objekte ermittelt wird, so dass ein Kriterium zur Bewertung der Objekte als Referenzflächen abgeleitet wird.

8. Verfahren nach Anspruch 7, **dadurch gekennzeichnet, dass** als Entscheidungskriterien für Referenzflächen die Unterschreitung einer Maximalgröße für die Reflexion im mittleren Infrarotbereich bzw. alternativ die Unterschreitung einer Spektralschwelle im Nahinfrarot-Kanal in Verbindung mit einer Überschreitung einer Mindestgröße für einen Vegetationsindex und zusätzlich die Überschreitung einer Mindestgröße des Gebiets definiert werden.

9. Verfahren nach Anspruch 5, **dadurch gekennzeichnet, dass** im Nachbarschaftsanalyse-Modul (NBA) eine Analyse der Daten mit Filtern in absteigender Größe hinsichtlich der Übergangskontraste zwischen den identifizierten Datensektoren vorgenommen wird, um so z.B. Wolken- oder Dunstbeeinflussung abschätzen und Phänomene unterschiedlicher Längenskalen, z.B. kleinräumige Variabilität der Landnutzung von großräumiger Veränderung des Atmosphärenzustandes trennen zu können.

10. Verfahren nach Anspruch 3, **dadurch gekennzeichnet, dass** der zweite Hauptmodul (CORA) aus zwei Submodulen (INPRE, DACO) besteht, von denen im ersten (INPRE) eine Aufarbeitung der benötigten Zusatzdaten vorgenommen wird, wobei in einem ersten Bereitstellungsteil (INPRE-INT) auf interne Zusatzdaten zugegriffen wird, wie sie aus den Rohdaten und den Ergebnissen des ersten Hauptmoduls (DERA) abgeleitet werden, und in einem zweiten Bereitstellungsteil (INPRE-EXT) externe Zusatzdaten verarbeitet werden, die über eine externe Schnittstelle (EXT-INTF) zugeführt werden, wobei auf Standardverfahren der Datenassimilation und -interpolation zurückgegriffen wird, die in der Datenbank (DABA) als Methoden bereitgestellt werden, und dass im zweiten Submodul (DACO) des zweiten Hauptmoduls (CORA) die eigentlichen Korrekturschritte mit Hilfe der Zusatzdaten aus dem ersten Submodul (INPRE) durchgeführt werden, wobei auf Korrekturverfahren in der Methoden enthaltenden Datenbank (DABA) zugegriffen wird.

11. Verfahren nach Anspruch 10, **dadurch gekennzeichnet, dass** im ersten Submoduls (INPRE) des zweiten Hauptmoduls (CORA) im einzelnen pixelweise als Zusatzdaten eine Trübungsmaske, eine Bodenmaske und eine Ausschlussmaske im ersten Bereitstellungsteil (INPRE-INT) und Spurengasmasken und ein Geländemodell im zweiten Bereitstellungsteil (INPRE-EXT) bestimmt werden.

12. Verfahren nach Anspruch 11, **dadurch gekennzeichnet, dass** durch den ersten Bereitstellungsteil (INPRE-INT) die aerosol-optische Dicke in sichtbaren Kanälen über den vom ersten Hauptmodul (DERA) ermittelten Referenzflächen mittels einer Dunkelfeldmethode ermittelt und mit geeigneten Interpolationsroutinen aus der Datenbank (DABA) auf alle Pixel und Spektralkanäle zur Bildung der Trübungsmaske übertragen wird und dass bei der räumlichen Interpolation die vom ersten Hauptmodul (DERA) ermittelten zusammenhängenden Gebiete ähnlicher Atmosphärenbedingungen berücksichtigt werden.

13. Verfahren nach Anspruch 11, **dadurch gekennzeichnet, dass** die vom ersten Hauptmodul (DERA) ermittelte Bodentypklasse im ersten Bereitstellungsteil (INPRE-INT) zur Auswahl der geeigneten Modellfunktion der anisotropen Reflexionseigenschaften bei der Bildung der Bodenmaske verwendet wird.

14. Verfahren nach Anspruch 11, **dadurch gekennzeichnet, dass** die vom ersten Hauptmodul (DERA) bestimmten Wolken- und Schattengebiete im ersten Bereitstellungsteil (INPRE-INT) als nicht zu korrigierende Pixel bei der Bildung der Ausschlussmaske vermerkt werden.

15. Verfahren nach Anspruch 11, **dadurch gekennzeichnet, dass** zur Bildung der Spurengasmasken über eine Schnittstelle (EXT-INTF), z.B. eine Online-Schnittstelle oder via CD-ROM, durch den zweiten Bereitstellungsteil (INPRE-EXT) Satelliten- bzw. Flugzeugdaten der Gesamtsäule von Ozon und Wasserdampf geladen und mit geeigneten Assimilationsmethoden, z.B. Harmonische Analyse, Kalmanfilter oder Kriging, aus der Datenbank (DABA) auf den Zeitpunkt/geographischen Ort der Rohdaten umgerechnet werden.

16. Verfahren nach Anspruch 11, **dadurch gekennzeichnet, dass** über eine Schnittstelle, welche mit derjenigen nach Anspruch 16 übereinstimmt oder übereinstimmen kann, durch den zweiten Bereitstellungsteil (INPRE-EXT) ein geeigneter Ausschnitt eines digitalen Höhenmodells erhoben und auf die Sensorkoordinaten umprojiziert wird.

17. Verfahren nach den Ansprüchen 10 und 11, **dadurch gekennzeichnet, dass** im zweiten Submodul (DACO) des zweiten Hauptmoduls (CORA) die pixelweise Korrektur aller durch die Ausschlussmaske nicht ausgeschlossenen Pixel mit Hilfe der Zusatzdaten aus dem ersten Submodul (INPRE) des zweiten Hauptmoduls (CORA) durchgeführt wird.

18. Verfahren nach Anspruch 17, **dadurch gekennzeichnet, dass** bei der Korrektur wahlweise auf schnelle Korrekturmethoden aus der Datenbank (DABA) zugegriffen wird, insbesondere auf bekannte Strahlungstransportprogramme wie z.B. 6S, SOS, MODTRAN-berechnete Lookup-Tabellen oder publizierte Parametrisierungsschemata, z.B. SMAC, EXACT.

19. Verfahren nach Anspruch 17 oder 18, **dadurch gekennzeichnet, dass** im zweiten Submodul (DACO) des zweiten Hauptmoduls (CORA) für jedes Pixel der Rohdaten eine Umrechnung (RECO) des am Oberrand der Atmosphäre gemessenen Wertes in einen Reflexionskoeffizienten am Boden durchgeführt wird, wobei die Pixelwerte der Trübungsmaske, der Bodenmaske, der Spurengasmaske und des Höhenmodells als Zusatzdaten verwendet werden, und dass vom zweiten Submodul (DACO) des zweiten Hauptmoduls (CORA) die Anisotropie der Reflexion von der Erdoberfläche durch Verwendung einer geeigneten Modellfunktion für jeden aus dem ersten Hauptmodul (DERA) bestimmten Bodentyp berücksichtigt wird.

20. Verfahren nach den Ansprüchen 17 bis 19, **dadurch gekennzeichnet, dass** bei Verwendung hochauflösender Sensoren im zweiten Submodul (DACO) des zweiten Hauptmoduls (CORA) für die Korrektur der Einstrahlung in das Gesichtsfeld des Sensors aus benachbarten Pixeln in einem zweiten Schritt (ACO) ein einfaches Filter unter Verwendung der Trübungsmaske eingesetzt wird.

21. Verfahren nach Anspruch 1 und einem der Ansprüche 2 bis 20, **dadurch gekennzeichnet, dass** in der Datenbank (DABA) für Methoden und Parameter Daten über Sensorparameter, Modellspektren, Aerosolmodelle, Anisotropietypen, Atmosphärenmodelle zusammen mit Methoden über Strahlungstransportmethoden, Parametrierungsschemata, Assimilations- und Interpolationsmethoden verfügbar sind.

22. Verfahren nach einem der vorhergehenden Ansprüche, **dadurch gekennzeichnet, dass** als Ergebnis ein Pixelbild der atmosphärenkorrigierten Bodenreflexion unter Berücksichtigung von atmosphärischen Zusatzdaten, anisotroper Reflexionseigenschaften verschiedener Bodentypklassen und der Geländehöhe geliefert wird.

23. Verfahren nach einem der vorhergehenden Ansprüche, **dadurch gekennzeichnet, dass** die Rohdaten grob (etwa ± 1 Pixel bzw. ± 1 Grad) mit der geographischen Position (geographische Länge, geographische Breite) und der Beobachtungsgeometrie (Beobachtungszenit, Beobachtungsazimut) jedes einzelnen Pixels annotiert sind.

24. Verfahren nach einem der vorhergehenden Ansprüche, **dadurch gekennzeichnet, dass** die multispektralen Rohdaten mindestens einen sichtbaren und einen Nah-Infrarot-Bereich aufweisen.

25. Verfahren nach Anspruch 24, **dadurch gekennzeichnet, dass** zusätzlich für ein genaueres Dunkelfeldverfahren ein Kanal im mittleren Infrarot- und für eine genauere spektrale Interpolation der aerosol-optischen Dicke ein weiterer Kanal im sichtbaren Lichtbereich vorgesehen sind.

26. Verfahren nach einem der vorhergehenden Ansprüche, **dadurch gekennzeichnet, dass** zu den Beobachtungsdaten die genaue Aufnahmezeit zur Berechnung des jeweiligen Sonnenstandes bereitgestellt wird.

27. Verfahren nach einem der Ansprüche 1 bis 25, **dadurch gekennzeichnet, dass** der momentane Zenit- und Azimutwinkel der Sonne zu jedem Pixel als zusätzlicher Kanal geliefert wird.

## Claims

1. A method for correcting atmospheric effects on ground reflectance pixel images captured by means of satellite or airborne sensors in multispectral optical and/or thermal remote sensing of the Earth's surface, **characterized in that** in a first partial process the multispectral raw remote sensing data serving pixel image generation are preclassified such that dark zones and areas of significant spectral response are detected and identified with access to generalized model spectra stored in a data base in assigning the pixels of each set of raw remote sensing data to the probably detected objects permitting remote sensing on the basis of the model spectra stored in the data base for objects permitting remote sensing at the pixel level, that in a second partial process, in which the uncorrected degrees of reflectance are converted into. corrected degrees of reflectance, additional access is made, for one thing, to internal supplementary data derived from the raw data and the results of the first partial process, and, for another, to external supplementary data furnished via an external interface and including substantially complete supplementary data as to the actual atmospheric condition are processed in accessing the methods of data assimilation and interpolation made available in the data base, and that then the actual correction steps are implemented with the aid of the supplementary data in accessing a data base containing correction procedures in the correction methods.

2. The method as set forth in claim 1, **characterized in that** each of the two partial processes is implemented in a module and that these two modules are joined together as main modules (DERA, CORA).

3. The method as set forth in claim 2, **characterized in that** the first main module (DERA) implementing the first partial process performs the detection and identification of dark areas and areas of significant spectral response in the raw remote sensing data and that in the second main module (CORA) the correction computation is implemented in accordance with the second partial process.

4. The method as set forth in claim 3, **characterized in that** the first main module (DERA) comprises two sub-modules (SSA, GSA) of which the first (SSA) is responsible for a spectral signature analysis and the second (GSA) for a geometrical structure analysis, that the data of the various sensors with differing geometric and/or spectral resolution are read into and processed in the first sub-module (SSA) directed at analyzing the spectral response at the pixel level as raw data with allocation of the pixels of the read-in remote sensing data set to the objects probably detected by remote sensing in reality on the basis of generalized model spectra for objects permitting remote sensing at the pixel level, the model spectra needed for this analysis are stored in the data base (DABA) which is accessed in the first partial process, and that in the second sub-module (GSA) of the main module (DERA) an homogeneity analysis of identified reference areas, an area size analysis as well as an analysis of the direct and indirect neighborhood is performed, this second sub-module (GSA) being communicated the data regions detected by the first sub-module (SSA) and examined for adequate size.

5. The method as set forth in claim 4, **characterized in that** the second sub-module (GSA) of the first main module (DERA) is modulized into a homogeneity analysis module (HMA), a size and shape analysis module (GFA) for identified areas and a neighborhood analysis module (NBA), that the homogeneity analysis module (HMA) performs identification of contiguous areas or areas needing to be treated separately in further image processing, that the size and shape analysis module (GFA) is used to assign the identification data regions an object identification so that the shape parameters can be directly assigned to the objects, and that the neighborhood analysis module (NBA) performs analysis of the direct and indirect neighborhood of the data regions identified as being homogenous, the aim of this analysis being the detection of so-called mixed and interference pixels which need to be treated separately as regards their association to adjacent objects to permit assigning them a suitable ground type class.

6. The method as set forth in claim 5, **characterized in that** in the homogeneity analysis module (HMA) image areas are examined with a filter matrix (m x m) as to their local homogeneity and compared to threshold values, the degree of homogeneity which is then made available as the threshold value for the data set being directly derived from the data and that in addition the data set is sectorized and statistically analyzed with filters of decreasing size, the mean value, the standard deviation as well as the variation coefficient being derived as statistical measures.

7. The method as set forth in claim 5, **characterized in that** in the size and shape analysis module (GFA) the area size, the scope and compactness of the objects are determined so that a criterion for weighting the objects as reference surface areas is derived.

8. The method as set forth in claim 7, **characterized in that** decision criteria for reference surface areas are defined as MIN violation of a maximum size for the reflectance in the mid-infrared range or alternately MIN violation of a spectral threshold in the near-infrared channel in conjunction with a MAX violation of a minimum value for a vegetation index and additional MAX violation of a minimum size of the area.

9. The method as set forth in claim 5, **characterized in that** data in the neighborhood analysis module (NBA) an analysis of the data is performed with filters of decreasing size as regards the transition contrasts between the identified data sectors so as to estimate e.g. the influence of clouds or haze in distinguishing phenomena of differing length scales e.g. small-scale variability of land utilization from large-scale changes in the atmospheric condition.

10. The method as set forth in claim 3, **characterized in that** the second main module (CORA) comprises two sub-modules (INPRE, DACO) of which in the first, (INPRE), the required supplementary data is processed by accessing in a first preparation module (INPRE-INT) internal supplementary data as derived from the raw data and the results of the first main module (DERA), and in a second preparation module (INPRE-EXT) external supplementary data are processed furnished via an external-interface by accessing standard procedures for data assimilation and interpolation made available as methods in the data base (DABA), and that in the second sub-module (DACO) of the second main module (CORA) the actual correction steps are implemented with the aid of the supplementary data from the first sub-module (INPRE) by accessing the correction methods in the data base (DABA) containing methods.

11. The method as set forth in claim 10, **characterized in that** in the first sub-module (INPRE) of the second main module (CORA) a turbidity mask, a ground mask and an exclusion mask are determined in the first preparation module (INPRE-INT) and trace gas masks and a terrain model are determined in the second preparation module (INPRE-EXT) for each pixel as supplementary data.

12. The method as set forth in claim 11, **characterized in that** by means of the first preparation module (INPRE-INT) the aerosol-optical thickness is established in visible channels over the reference surface areas established by the first main module (DERA) by means of a dark field method and translated with suitable interpolation routines from the data base (DABA) to all pixels and spectral channels for forming the turbidity mask and that in the spatial interpolation the contiguous areas of similar atmospheric conditions established by the first main module (DERA) are taken into account.

13. The method as set forth in claim 11, **characterized in that** the ground type class established by the first main module (DERA) in the first preparation module (INPRE-INT) is used to select the suitable model function of the anisotropic reflectance properties in forming the ground mask.

14. The method as set forth in claim 11, **characterized in that** the cloud and shade areas determined by the first main module (DERA) are annotated in the first preparation module (INPRE-INT) as pixels not to be corrected in forming the exclusion mask.

15. The method as set forth in claim 11, **characterized in that** for forming the trace gas masks satellite or airborne data of the total column ozone and water vapor amounts are loaded by the second preparation module (INPRE-EXT) via an interface, e.g. an online interface or via, CD-ROM and converted to the time/geographic location of the raw data by suitable methods of assimilation, e.g. harmonic analysis, Kalman filters or Kinging from the data base (DABA).

16. The method as set forth in claim 11, **characterized in that** via an interface which may be the same as that of claim 15 a suitable section of a digital elevation model is acquired and reprojected to the sensor coordinates by the second preparation module (INPRE-EXT).

17. The method as set forth in claim 10 and claim 11, **characterized in that** in the second sub-module (DACO) of the second main module (CORA) all pixels not excluded by the exclusion mask are corrected pixel-by-pixel with the aid of the supplementary data from the first sub-module (INPRE) of the second main module (CORA).

18. The method as set forth in claim 17, **characterized in that** in correction optional access is made to fast methods of correction from the data base (DABA), more particularly to known radiation transport programs such as e.g. 6S, SOS, MODTRAN computed lookup tables or publicized parametrization schemes, e.g. SMAC, EXACT.

19. The method as set forth in claim 17 or 18, **characterized in that** the value measured at the upper edge of the atmosphere is recomputed (RECO) into a reflectance coefficient at the ground in the second sub-module (DACO) of the second main module (CORA) for each pixel of the raw data in making use of the pixel values of the turbidity mask, the ground mask, the trace gas mask and the elevation model as supplementary data and that by the second sub-module (DACO) of the second main module (CORA) the anisotropy of the reflectance from the surface of the earth is taken into account by using a suitable model function for each ground type determined from the first main module (DERA).

20. The method as set forth in any of the claims 17 to 19, **characterized in that** a simple filter in conjunction with the turbidity mask is employed in the use of high-resolution sensors in the second sub-module (DACO) of the second main module (CORA) for correcting irradiation into the line of sight of the sensor of neighboring pixels in a second step (ACO).

21. The method as set forth in claim 1 and in any of the claims 2 to 20, **characterized in that** in the data as to sensor parameters, model spectra, aerosol models, anisotropic types, atmosphere models together with methods as to radiation transport methods, parametrization schemes, assimilation and interpolation methods are available in the data base (DABA) for methods and parameters.

22. The method as set forth in any of the preceding claims, **characterized in that** a pixel image of the atmosphere-corrected ground reflectance is furnished as the result in taken into account atmospheric supplementary data, anisotropic reflectance characteristics of various ground type classes and terrain elevation.

23. The method as set forth in any of the preceding claims, **characterized in that** the raw data is annotated coarsely (roughly ± 1 pixel or ± 1 degree) with the geographic position (geographic longitude, geographic latitude) and the observation geometry (observation zenith, observation azimuth) for each individual pixel.

24. The method as set forth in any of the preceding claims, **characterized in that** the multispectral raw data comprise at least one visible range and a near infrared range.

25. The method as set forth in claim 24, **characterized in that** for a more precise dark field method an additional channel is provided in the mid-infrared range and for a more precise spectral interpolation of the aerosol-optical thickness a further channel is provided in the visible light range.

26. The method as set forth in any of the preceding claims, **characterized in that** for computing the solar elevation the precise point in time of observation is furnished with the observation data.

27. The method as set forth in any of the claims 1 to 25, **characterized in that** the current zenith and azimuth angle of the sun is furnished for each pixel as an additional channel.

## Revendications

1. Procédé pour corriger des influences atmosphériques d'images de pixels de réflexion au sol, enregistré lors d'une télé-identification optique et/ou thermique multispectrale du sol au moyen de capteurs installés dans un satellite ou un avion, **caractérisé en ce que** dans un premier processus partiel, un classement préalable de données brutes de télé-identification multispectrale utilisées pour la production d'images de pixels est exécuté de telle sorte que des zones sombres et des zones ayant un comportement spectral significatif sont détectées et identifiées moyennant l'accès à des spectres modèles généralisés mémorisés dans une banque de données, on réalise sur la base des spectres de modèles mémorisés dans la banque de données, pour des objets télé-identifiables dans des pixels une affectation des pixels de l'ensemble de données brutes de télé-identification lus respectivement, aux objets télé-identifiables détectés de façon probable, dans un second processus partiel, dans lequel les degrés de réflexion non corrigés sont convertis en des degrés de réflexion corrigés, à cet effet d'une part on accède à des données supplémentaires internes, dérivées des données brutes et des résultats du premier processus partiel, et d'autre part des données supplémentaires externes, qui sont envoyées par une interface externe et dans lesquelles sont insérées des données supplémentaires essentiellement complètes concernant l'état atmosphérique actuel, sont traitées en référence à des procédés, qui sont disponibles dans la banque de données, de l'assimilation et de l'interpolation de données, et qu'ensuite les étapes de correction proprement dites sont exécutées à l'aide de ces données supplémentaires, auquel cas on se réfère à des procédés de correction dans la banque de données contenant des procédés de correction.

2. Procédé selon la revendication 1, **caractérisé en ce que** les deux processus partiels sont exécutés respectivement dans un module et que ces deux modules sont réunis en tant que modules principaux (DERA, CORA).

3. Procédé selon la revendication 2, **caractérisé en ce qu'**un premier module principal (DERA), qui exécute le premier processus partiel, réalise la détection et l'identification de zones sombres et de zones ayant un comportement spectral significatif dans les données brutes de télé-identification et le calcul de correction est exécuté, dans le second module (CORA) conformément au second processus partiel.

4. Procédé selon la revendication 3, **caractérisé en ce que** le premier module principal (DERA) est constitué par deux sous-modules (SSA, GSA), parmi lesquels le premier (SSA) est affecté à une analyse spectrale des signaux et dont le second (GSA) est affecté à une analyse de la structure géométrique, que dans le premier sous-module (SSA), qui est basé sur l'analyse du comportement spectral dans le plan des pixels, les données des différents capteurs avec une résolution géométrique et/ou spectrale différente sont lues et traitées en tant que données brutes et sur la base de spectres de modèles généralisés pour des objets télé-identifiables dans le plan des pixels, une affectation des pixels de l'ensemble lu de données de télé-identification aux objets télé-identifiables détectés de façon probable, et exécuté dans la réalité, auquel cas les spectres de modèles nécessaires pour cette analyse sont mémorisés dans la banque de données (DABA), à laquelle un accès est réalisé lors du premier processus partiel et que dans le second sous-module (GSA) du premier module principal (DERA), une analyse d'homogénéité de zones de référence identifiées, une analyse des tailles de zones ainsi qu'une analyse du voisinage direct et indirect sont réalisées, auquel cas des zones de données détectées par le premier sous-module (SSA) sont transmises à ce second sous-module (GSA) et sont examinées pour voir si elles présentent une taille suffisante.

5. Procédé selon la revendication 4, **caractérisé en ce que** le second sous-module (GSA) du premier module principal (DERA) est subdivisé en un module d'analyse d'homogénéité (HMA), un module d'analyse (GFA) de taille et de formes pour des zones identifiées et un module d'analyse de voisinage (NBA), que le module d'analyse d'homogénéité (HMA) réalise l'identification de zones dépendantes ou de zones, qui doivent être traitées séparément lors de la suite du traitement d'image, que grâce au module (GFA) d'analyse de tailles et de formes, une identification d'objet est associée aux zones de données identifiées de telle sorte que les paramètres de forme peuvent être affectés directement aux objets, et que le module (NBA) d'analyse de voisinage exécute l'analyse du voisinage direct et du voisinage indirect des régions de données identifiées comme homogènes, le but de cette analyse résidant dans la détection de ce qu'on appelle des pixels mixtes et des pixels parasites, qui sont traités séparément en ce qui concerne leur appartenance à des objets contigus, afin de pouvoir leur associer une classe appropriée de type de type de sol.

6. Procédé selon la revendication 5, **caractérisé en ce que** dans le module d'analyse d'homogénéité (HMA), comportant une matrice de filtre examine l'homogénéité locale de (m x n) zones d'image est déterminée et comparée à des valeurs de seuil, le degré d'homogénéité, qui est alors fourni en tant que valeur de seuil pour l'ensemble de données, est dérivé directement des données et qu'à cet effet l'ensemble de données est subdivisé en secteurs de données et est analysé avec des filtres ayant une taille croissante, auquel cas on obtient en tant que grandeurs statiques la valeur moyenne, l'écart-type ainsi que le coefficient de variation.

7. Procédé selon la revendication 5, **caractérisé en ce que** dans le module (GFA) d'analyse de tailles et de formes, l'étendue en surface et la compacité des objets sont déterminées de telle sorte qu'on obtient un critère pour évaluer les objets en tant que surfaces de référence.

8. Procédé selon la revendication 7, **caractérisé en ce qu'**on utilise comme critères de décision pour des surfaces de référence, le dépassement vers le bas d'une grandeur maximale pour la réflexion ou dans le domaine de l'infrarouge moyen ou sinon le dépassement vers le bas d'un seuil spectral dans le canal du proche infrarouge en liaison avec un dépassement vers le haut d'une grandeur minimale pour un indice de végétation et en outre le dépassement vers le haut d'une taille minimale de l'objet.

9. Procédé selon la revendication 5, **caractérisé en ce que** dans le module (NBA) d'analyse de voisinage, une analyse des données avec des filtres ayant des tailles décroissantes concernant les contrastes de transition entre des sections identifiées de données est exécutée, de manière à permettre d'estimer ainsi par exemple l'influence de nuages et du brouillard et de séparer des phénomènes ayant des échelles différentes de longueur, comme par exemple une variabilité de faible ampleur de l'utilisation terrestre d'une variation de grande amplitude de l'état atmosphérique.

10. Procédé selon la revendication 3, **caractérisé en ce que** le second principal (CORA) est constitué par deux sous-modules (INPRE, DACO), dans le premier (INPRE) desquels un traitement des données supplémentaires requises est exécuté, auquel cas dans une première partie de préparation (INPRE-INT) un accès est réalisé à des données supplémentaires internes, lesquelles sont obtenues à partir de données brutes et des résultats du premier module principal (DERA), et dans une seconde partie de préparation (INPRE-EXT), des données externes, qui sont envoyées par une interface externe (EXT-INTF), sont traitées, auquel cas on accède à des procédés standards de l'assimilation et de l'interprétation des données, qui sont fournis dans la banque de données (DABA) en tant que procédés et que dans le second sous-module (DACO) du second module principal (CORA), les étapes proprement dites de correction sont exécutées à l'aide des données supplémentaires tirées du premier sous-module (INPRE), auquel cas on accède à des procédés de correction dans la banque de données (DABA) contenant des procédés.

11. Procédé selon la revendication 10, **caractérisé en ce que** dans le premier module (INPRE) du deuxième module principal (CORA), un masque de turbidité, un masque de sol et un masque d'exclusion sont déterminés dans la première partie de préparation (INPRE-INT) et des masques de gaz à l'état de trace et un modèle de terrain sont déterminés dans la seconde partie de préparation (INPRE-EXT), de façon détaillée pixel par pixel en tant que données supplémentaires.

12. Procédé selon la revendication 11, **caractérisé en ce que** l'épaisseur optique d'aérosol dans des canaux visibles est déterminée au moyen de la première partie de préparation (INPRE-INT), au moyen d'un procédé à champ sombre par l'intermédiaire des surfaces de référence déterminées par le premier module principal (DERA), et est transmise à l'aide de programmes appropriés d'interpolation, depuis la banque de données (DABA) à tous les pixels et à tous les canaux spectraux pour la formation des masques de turbidité, et que, lors de l'interpolation spatiale, les régions réunies, déterminées par le premier module principal (DERA), de conditions atmosphériques similaire) sont prises en compte.

13. Procédé selon la revendication 11, **caractérisé en ce que** la classe de type de sol déterminée par le premier module principal (DERA), est utilisée dans la première partie de préparation (INPRE-INT) pour sélectionner la fonction modèle appropriée des caractéristiques de réflexion anisotropes lors de la formation du masque de sol.

14. Procédé selon la revendication 11, **caractérisé en ce que** les zones de nuages et d'ombres, déterminées par le premier module principal (DERA), ne sont pas remarquées, dans la première partie de préparation (INPRE-INT) en tant que pixels ne devant pas être corrigés, lors de la formation du masque de fusion.

15. Procédé selon la revendication 11, **caractérisé en ce que** pour la formation des masques à gaz à l'état de trace, des données de satellites ou des données d'avions concernant ensemble de la colonne d'ozone et de vapeur d'eau sont chargées au moyen d'une interface (EXT-INTF), par exemple d'une interface en ligne ou par l'intermédiaire d'une mémoire CD-ROM, au moyen de la deuxième partie de préparation (INPRE-EXT), sont converties avec des procédés appropriés d'assimilation, par exemple une analyse harmonique, un filtre de Kalman ou un Kriging, de la banque de données (DABA), en l'instant/l'emplacement géographique des données brutes.

16. Procédé selon la revendication 11, **caractérisé en ce qu'**une partie appropriée d'un modèle de hauteur numérique est mise en relief au moyen d'une interface, qui coincide de préférence avec celle de la revendication 16, au moyen de la seconde partie de préparation (INPRE-EXT), et est projeté sur les coordonnées du capteur.

17. Procédé selon les revendications 10 et 11, **caractérisé en ce que** dans le second sous-module (DACO) du second module principal, la correction pixel par pixel de l'ensemble des pixels qui ne sont exclus par le masque d'exclusion, est exécutée à l'aide des données supplémentaires tirées du premier sous-module (INPRE) du second module principal (CORA).

18. Procédé selon la revendication 17, **caractérisé en ce que** lors de la correction, on accède au choix à des procédés de correction rapides à partir de la banque de données (DABA), et notamment on accède à des programmes connus de transfert de rayonnement, comme par exemple les tables de consultation calculées par exemple à partir de 6S, SOS, MODTRAN, ou des schémas publiés de paramétrage, par exemple SMAC, EXACT.

19. Procédé selon la revendication 17 ou 18, **caractérisé en ce que** dans le second sous-module (DACO) du second module principal (CORA) on exécute pour chaque pixel des données brutes et une conversion (RECO) de la valeur, mesurée de la limite supérieure de l'atmosphère, en un coefficient de réflexion au sol, les valeurs de pixels du masque de turbidité, du masque du sol, du masque de gaz à l'état de trace et du modèle de hauteur sont utilisées en tant que données supplémentaires, et que le second sous-module (DACO) du second module principal (CORA), prend en compte l'anisotropie de la réflexion de la surface de la terre, moyennant l'utilisation d'une fonction de modèle appropriée et à chaque type de sol déterminé à partir du premier module principal (DERA).

20. Procédé selon les revendications 17 à 19, **caractérisé en ce que** dans le cas de l'utilisation de capteurs à haute résolution, dans le second module (DACO) du second module principal (CORA), pour la correction du rayonnement entrant dans le champ de vision du capteur, à partir de pixels voisins, on introduit, lors d'une seconde étape (ACO), un filtre simple utilisation du masque de turbidité.

21. Procédé selon la revendication 1 et l'une des revendications 2 à 20, **caractérisé en ce que** dans la banque de données (DABA) pour des procédés et des paramètres, on dispose de données concernant des paramètres de capteurs, des spectres de modèles, des modèles d'aération, des types d'anisotropie, des modèles d'atmosphères ainsi que des procédés concernant des procédés de transfert de rayonnement, des schémas de paramétrage, des procédés d'assimilation et d'interpolation.

22. Procédé selon l'une des revendications précédentes, **caractérisé en ce qu'**on délivre comme résultat une image de pixel de la réflexion au sol, corrigée de l'atmosphère, en tant compte de données atmosphériques supplémentaires, de caractéristiques de réception anisotrope, de différentes classes de types de sol et la hauteur du terrain.

23. Procédé selon l'une des revendications précédentes, **caractérisé en ce que** les données brutes sont annotées grossièrement, (approximativement ± 1 pixel ou ± 1 degré) avec la position géographique (longueur géographique, largeur géographique) et la géométrie d'observation (zénith d'observation, azimut d'observation) de chaque pixel individuel.

24. Procédé selon l'une des revendications précédentes, **caractérisé en ce que** les données brutes multispectrales comportent au moins une gamme visible et une gamme du proche infrarouge.

25. Procédé selon la revendication 24, **caractérisé en ce qu'**il est prévu, en supplément pour un procédé plus précis à champ sombre, un canal dans la gamme de l'infrarouge moyen et pour une interpolation spectrale plus précise de la densité optique d'aérosol, un autre canal dans la gamme de la lumière visible.

26. Procédé selon l'une des revendications précédentes, **caractérisé en ce que** pour les données d'information, on prépare la durée d'enregistrement précise pour le calcul de la position respective du soleil.

27. Procédé selon l'une des revendications 1 à 25, **caractérisé en ce que** l'angle de zénith et l'angle d'azimut instantanés du soleil sont fournis pour chaque pixel en tant que canal supplémentaire.
